# EUROPEAN PATENT APPLICATION

(11) **EP 3 636 128 A1**
(43) Date of publication of application: **15.04.2020**
(21) Application number: 17912517.4
(22) Date of filing: 07.06.2017
(51) Int. Cl.: A47L 9/28

(54) **SELF-PROPELLED VACUUM CLEANER**

(71) Applicant: Chiba Institute of Technology, Narashino-shi, Chiba 275-0016 (JP)
(72) Inventor: FURUTA, Takayuki, Narashino-shi Chiba 275-0016 (JP); TOMONO, Masahiro, Narashino-shi Chiba 275-0016 (JP); YAMATO, Hideaki, Narashino-shi Chiba 275-0016 (JP); YOSHIDA, Tomoaki, Narashino-shi Chiba 275-0016 (JP); SHIMIZU, Masaharu, Narashino-shi Chiba 275-0016 (JP); OKUMURA, Yu, Narashino-shi Chiba 275-0016 (JP); TODA, Kengo, Narashino-shi Chiba 275-0016 (JP); KODACHI, Takashi, Narashino-shi Chiba 275-0016 (JP); IRIE, Kiyoshi, Narashino-shi Chiba 275-0016 (JP); HARA, Yoshitaka, Narashino-shi Chiba 275-0016 (JP); OGIHARA, Kazuki, Narashino-shi Chiba 275-0016 (JP)
(74) Representative: Zimmermann, Tankred Klaus
(86) International application number: PCT/JP2017/021104
(87) International publication number: WO 2018/225174

(57) **Abstract**

Provided is a self-propelled vacuum configured so that depending on an obstacle, the self-propelled vacuum can move over the obstacle without performing avoidance operation to shorten cleaning time. A self-propelled vacuum 1 includes a vacuum body 2, a suction unit 5 for sucking dust and the like on a floor surface F, a traveling drive unit 4 configured to drive wheels 21, a front sensor 51 configured to sense an obstacle S in the front in a traveling direction, and a vehicle height adjustment unit 6 configured to move the wheels 21 up and down to adjust the vehicle height of the vacuum body 2. In a case where the traveling drive unit 4 is driven and the front sensor 51 senses the obstacle S during self-propelling, the vehicle height adjustment unit 6 increases the vehicle height to a predetermined height, and thereafter, the self-propelled vacuum 1 moves over the obstacle S while the vehicle height is being adjusted such that a distance to the obstacle S is held within a predetermined range.

## Description

### TECHNICAL FIELD

The present invention relates to a self-propelled vacuum.

### BACKGROUND ART

Typically, one including a traveling section configured to cause a vacuum body to travel and a suction section configured to suck dust and the like into a dust collection chamber in the vacuum body through a suction port has been known as a self-propelled vacuum (a cleaning robot) for cleaning a floor surface (see, e.g., Patent Literature 1). The traveling section includes a pair of right and left wheels and two motors configured to drive each wheel in a forward rotation direction and a reverse rotation direction. The traveling section causes the vacuum body to travel in a front-back direction, and turns the vacuum body in an optional direction. The suction section includes a duct and an air blower communicating with the suction port, and a rotary brush provided at the suction port. The suction section is configured to suck, through the suction port, dust and the like scraped off by the rotary brush.

Such a typical self-propelled vacuum is programmed to perform cleaning while self-propelling according to a preset traveling map. Moreover, in a case where a contact sensor has sensed contact with an obstacle such as a wall or furniture, the self-propelled vacuum returns to a route of the traveling map after having changed a traveling direction to avoid the obstacle.

### CITATION LIST

### PATENT LITERATURE

PATENT LITERATURE 1: JP-A-2016-135303

### SUMMARY

### PROBLEMS TO BE SOLVED BY THE INVENTION

However, in the typical self-propelled vacuum, contact with the obstacle is sensed by the contact sensor, and for this reason, the presence of the obstacle cannot be recognized until contact. Further, avoidance operation is performed in a trial-and-error manner while the contact sensor repeatedly contacts the obstacle, and for this reason, there is a problem that it takes time to cause the self-propelled vacuum to return to the route of the traveling map.

An object of the present invention is to provide a self-propelled vacuum configured so that depending on an obstacle, the self-propelled vacuum can move over the obstacle without performing avoidance operation to shorten cleaning time.

### SOLUTIONS TO THE PROBLEMS

The self-propelled vacuum of the present invention is a self-propelled vacuum for performing cleaning while traveling along a floor surface, the self-propelled vacuum including a vacuum body having a wheel for self-propelling, a suction port provided at a lower surface of the vacuum body to suck dust and the like on a floor surface, a traveling drive unit configured to drive the wheel, an obstacle sensing unit configured to sense an obstacle in the front in a traveling direction, a vehicle height adjustment unit configured to move the wheel up and down to adjust the vehicle height of the vacuum body, a traveling control unit configured to control the traveling drive unit, and a vehicle height control unit configured to control the vehicle height adjustment unit. In a case where the traveling drive unit is driven and the obstacle sensing unit senses the obstacle during self-propelling, the vehicle height adjustment unit increases the vehicle height to a predetermined height, and thereafter, the self-propelled vacuum moves over the obstacle while the vehicle height is being adjusted such that a distance to the obstacle is held within a predetermined range.

According to the present invention described above, in a case where the obstacle sensing unit has sensed the obstacle during traveling, the vehicle height adjustment unit increases the vehicle height to the predetermined height, and thereafter, the self-propelled vacuum moves over the obstacle while the vehicle height is being adjusted such that the distance to the obstacle is held within the predetermined range. Thus, in the case of an obstacle over which the self-propelled vacuum can move, traveling can be continued without performing the avoidance operation, and the cleaning time can be shortened. Moreover, when the self-propelled vacuum moves over the obstacle, the vehicle height is adjusted such that the distance to the obstacle is held within the predetermined range. Thus, separation of the suction port and the floor surface or the obstacle more than necessary can be prevented, and degradation of suction performance can be reduced.

In the present invention, the obstacle sensing unit preferably includes a height sensor configured to measure the height of the obstacle from the floor surface, and the vehicle height adjustment unit preferably increases the vehicle height based on a measurement result of the height sensor.

According to such a configuration, the vehicle height adjustment unit increases the vehicle height based on the measurement result of the height sensor. Thus, the vehicle height can be adjusted according to the height of the obstacle from the floor surface, and vehicle height adjustment accuracy can be improved and degradation of the suction performance can be further reduced.

In the present invention, the height sensor is preferably provided in the front of the vacuum body, and is preferably configured to measure the height of the obstacle from the floor surface by changing a sensing area in an up-down direction in association with adjustment of the vehicle height of the vacuum body by the vehicle height adjustment unit.

According to such a configuration, the up-down sensing area of the height sensor provided in the front of the vacuum body can be changed in association with vehicle height adjustment by the vehicle height adjustment unit, and the height of the obstacle can be measured by such vehicle height adjustment. Thus, a general front sensor configured to sense the front of the vacuum body can be utilized as the height sensor, and the configuration of the obstacle sensing unit can be simplified.

In the present invention, the obstacle sensing unit preferably includes a distance sensor provided at a lower front portion of the vacuum body to measure the distance to the obstacle. Based on a measurement result of the distance sensor, the vehicle height adjustment unit preferably adjusts the vehicle height such that the distance to the obstacle is held within the predetermined range.

According to such a configuration, the vehicle height adjustment unit adjusts the vehicle height based on the measurement result of the distance sensor such that the distance to the obstacle is held within the predetermined range, and therefore, the vehicle height adjustment accuracy can be further improved.

In the present invention, the distance sensor preferably includes a step sensor configured to sense a step on the floor surface.

According to such a configuration, the step sensor configured to sense the step on the floor surface is utilized as the distance sensor so that the distance to the obstacle can be also sensed by the distance sensor. Moreover, an additional distance sensor does not need to be provided. Thus, an increase in the number of components can be prevented.

In the present invention, the obstacle sensing unit preferably includes a contact sensor configured to sense contact with the obstacle. In a case where the contact sensor has contacted the obstacle to sense the obstacle, the vehicle height adjustment unit preferably increases the vehicle height to a predetermined height.

According to such a configuration, in a case where the contact sensor has contacted the obstacle to sense the obstacle, the vehicle height adjustment unit increases the vehicle height to the predetermined height so that the presence of the obstacle can be directly sensed by the contact sensor and move-over operation can be performed based on such sensing.

In the present invention, the suction port is preferably provided to freely protrude or retract from the lower surface of the vacuum body.

According to such a configuration, the suction port is provided to freely protrude or retract from the lower surface of the vacuum body. Thus, in a case where the vehicle height adjustment unit has increased the vehicle height, the suction port can move down to constantly hold a distance to the floor surface, and the suction performance can be maintained.

### BRIEF DESCRIPTION OF THE DRAWINGS

Fig. 1 is a perspective view of a self-propelled vacuum according to a first embodiment of the present invention.
Fig. 2 is a sectional view of the self-propelled vacuum.
Fig. 3 is a sectional view of operation of the self-propelled vacuum.
Fig. 4 is a functional block diagram of an outline configuration of the self-propelled vacuum.
Figs. 5(A) to 5(E) are side views of operation of the self-propelled vacuum.
Figs. 6(A) to 6(C) are side views of another type of operation of the self-propelled vacuum.
Figs. 7(A) to 7(C) are side views of still another type of operation of the self-propelled vacuum.
Fig. 8 is a sectional view of a variation of the self-propelled vacuum.
Fig. 9 is a sectional view of a self-propelled vacuum according to a second embodiment of the present invention.
Figs. 10(A) and 10(B) are side views of operation of the self-propelled vacuum.
Figs. 11(A) and 11(B) are side views of variations of the self-propelled vacuum.

### DESCRIPTION OF THE EMBODIMENTS

### [First Embodiment]

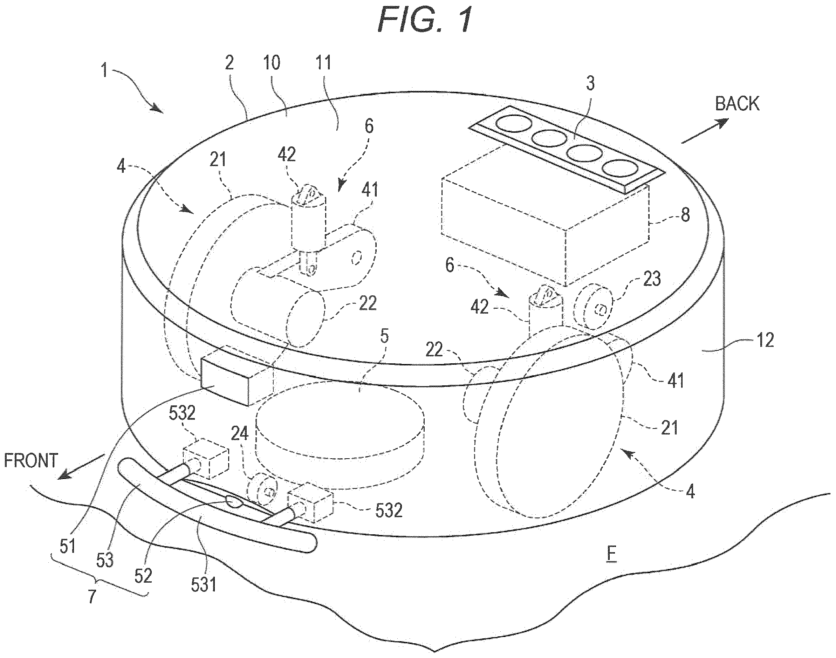

Hereinafter, a first embodiment of the present invention will be described with reference to Figs. 1 to 7.

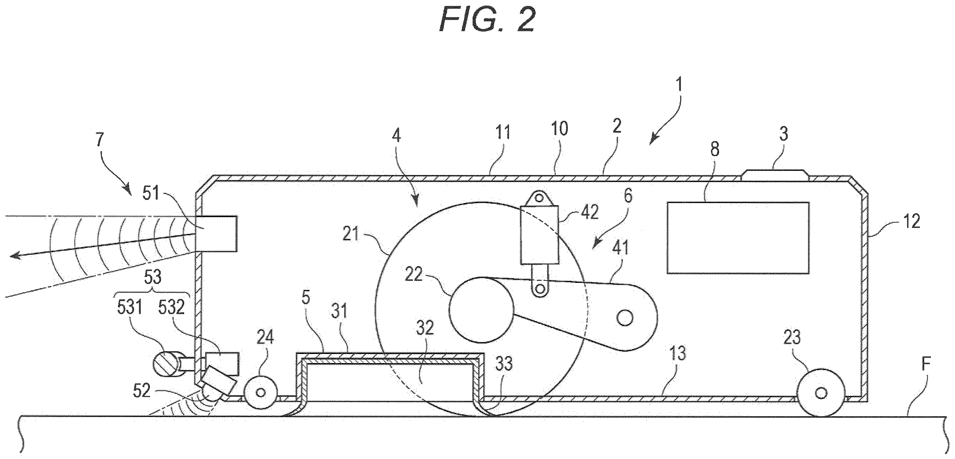

Fig. 1 is a perspective view of a self-propelled vacuum according to the first embodiment of the present invention, and Fig. 2 is a sectional view of the self-propelled vacuum.

As illustrated in Figs. 1 and 2, the self-propelled vacuum 1 is a cleaning robot configured to clean a floor surface F while traveling along the floor surface F, and includes a vacuum body 2, a body operation unit 3 configured to operate the self-propelled vacuum 1, a traveling drive unit 4 having a pair of wheels 21 for self-propelling, a suction unit 5 provided at a lower surface of a body 10 to suck grit and dust on the floor surface F, a vehicle height adjustment unit 6 configured to move the wheels 21 up and down to adjust the vehicle height of the vacuum body 2, a sensor unit 7 as an obstacle sensing unit configured to sense the periphery of the vacuum body 2, and a control unit 8 configured to control the traveling drive unit 4, the suction unit 5, the vehicle height adjustment unit 6, and the sensor unit 7.

The vacuum body 2 has the body 10 having a cylindrical entire shape, and the body 10 includes a discoid upper surface 11, a cylindrical side surface 12, and a chassis 13 forming a bottom surface. The body operation unit 3 is provided at the upper surface 11 of the body 10. The body operation unit 3 is provided with a power ON/OFF button, a cleaning mode selection button, and a stop button, a charge button, and the like.

The traveling drive unit 4 includes the pair of right and left wheels 21 and a motor 22 configured to independently and rotatably drive the pair of wheels 21. Moreover, as illustrated in Fig. 2, a safety wheel 23 is provided on the back side of the body 10, and a guide wheel 24 configured not to contact the floor surface F normally is provided on the front side of the body 10.

As illustrated in Fig. 2, the suction unit 5 includes a guide recessed portion 31 fixed to the chassis 13 and recessed inward of the body 10 and a suction port 32 supported in the guide recessed portion 31 and provided to move up and down. A brush portion 33 configured to contact the floor surface F is provided at a lower edge of the suction port 32. Moreover, a not-shown duct, a not-shown air blower, a not-shown dust collection chamber, and a not-shown exhaust port are connected to the suction port 32 such that sucked dust and the like are collected by a filter of the dust collection chamber and sucked air is discharged through the exhaust port.

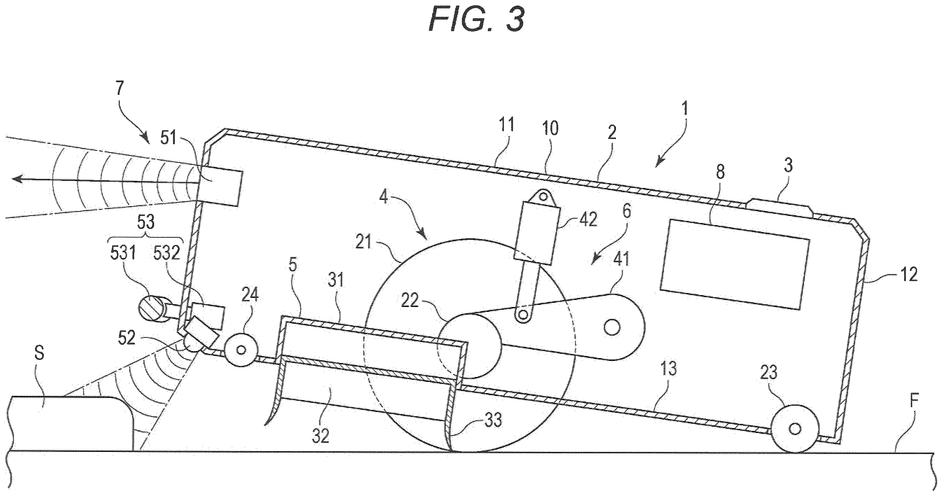

Fig. 3 is a sectional view of operation of the self-propelled vacuum, Fig. 3 being a view in a state in which the vehicle height of the vacuum body 2 is increased by the vehicle height adjustment unit 6.

The vehicle height adjustment unit 6 includes an arm 41 of which one end side is rotatably movably supported on the chassis 13 and of which other end side is coupled to the motor 22 of the traveling drive unit 4 and an actuator 42 configured to drive the arm 41 in an up-down direction. The vehicle height adjustment unit 6 drives the actuator 42 to extend or contract the actuator 42, thereby moving the wheels 21 up and down through the arm 41 to change the vehicle height and posture of the vacuum body 2. That is, the wheels 21 are moved down to increase the front vehicle height of the vacuum body 2 about the safety wheel 23 as the point of support, and accordingly, the posture of the vacuum body 2 is changed to a state in which the vacuum body 2 is inclined upwardly to the front.

Specifically, an output shaft of the actuator 42 is extended such that the arm 41 is rotatably downwardly moved, and the motor 22 and the wheels 21 are moved downwardly relative to the vacuum body 2 such that the front side of the vacuum body 2 is moved up about the safety wheel 23 as the point of support relative to the floor surface F. In a case where the front side of the vacuum body 2 is moved up to increase a distance to the floor surface F as described above, the suction port 32 moves down from the guide recessed portion 31 due to the force of gravity in the suction unit 5, and contact between the brush portion 33 and the floor surface F is maintained.

The sensor unit 7 includes a front sensor 51 provided at an upper front portion of the side surface 12 of the body 10, a distance sensor 52 provided at a lower front portion of the body 10, and a contact sensor 53 provided at a lower front portion of the side surface 12 of the body 10.

The front sensor 51 is configured to sense the front of the vacuum body 2, and for examples, includes a laser range finder (LRF). The front sensor 51 is a laser distance meter configured to measure a distance by irradiation of laser light such as infrared laser, and calculates a distance to an obstacle S from time until the irradiated laser light returns after having been reflected on the obstacle S.

The distance sensor 52 is configured to sense a distance to the floor surface F or the obstacle S in the front of the vacuum body 2 in a traveling direction thereof, and for example, includes a position sensitive detector (PSD) as a position detection element. The distance sensor 52 irradiates laser light such as infrared laser to calculate the distance to the floor surface F or the obstacle S based on spot light reflected on the floor surface F or the obstacle S. The distance sensor 52 functions as a step sensor configured to measure the distance to the floor surface F during traveling to sense a step in a case where the step is present on the floor surface F, thereby preventing falling from the step.

The contact sensor 53 includes a bumper 531 provided to protrude forward of the side surface 12 of the body 10 and a displacement meter 532 configured to sense backward movement of the bumper 531. When the bumper 531 contacts, e.g., the obstacle S, furniture, or a wall on the floor surface F and moves backward, the displacement meter 532 of the contact sensor 53 senses such movement to sense contact with the obstacle S or the like.

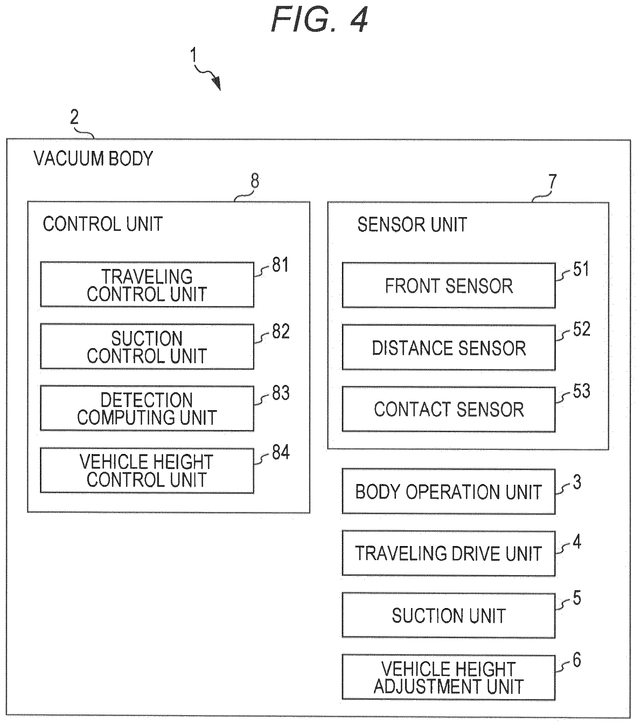

Fig. 4 is a functional block diagram of an outline configuration of the self-propelled vacuum.

The control unit 8 of the vacuum body 2 includes a traveling control unit 81 configured to drivably control the traveling drive unit 4, a suction control unit 82 configured to control the suction unit 5, a detection computing unit 83 configured to process a detection signal from the sensor unit 7 to compute the distance to the obstacle S, and a vehicle height control unit 84 configured to drivably control the vehicle height adjustment unit 6.

The traveling control unit 81 drivably controls the motor 22 of the traveling drive unit 4 to rotate the wheels 21, thereby moving the self-propelled vacuum 1 forward or backward. The suction control unit 82 drivably controls a not-shown fan of the suction unit 5 to suck dust and the like through the suction port 32. The detection computing unit 83 receives detection signals from the front sensor 51 and the distance sensor 52 of the sensor unit 7 to compute the distance to the peripheral obstacle, and determines contact with the obstacle S when having received a sensing signal from the contact sensor 53. As illustrated in Fig. 3, the vehicle height control unit 84 drivably controls the actuator 42 of the vehicle height adjustment unit 6 to rotatably move the arm 41, thereby moving the wheels 21 up and down to adjust the vehicle height of the vacuum body 2.

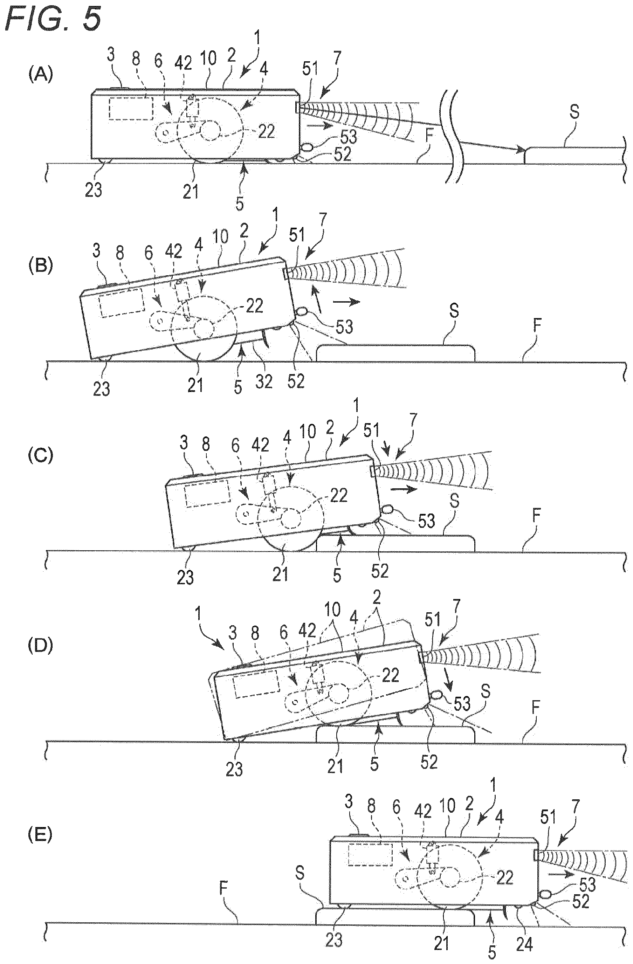

Hereinafter, operation of the self-propelled vacuum 1 will be described with reference to Figs. 5 to 7. Figs. 5(A) to 5(E) are side views of operation of the self-propelled vacuum.

As illustrated in Fig. 5(A), when the self-propelled vacuum 1 is powered ON, the traveling control unit 81 of the control unit 8 drivably controls the traveling drive unit 4 according to a preset traveling program, thereby rotating the wheels 21 by the motor 22 to self-propel the vacuum body 2. In association with traveling of the vacuum body 2, the suction control unit 82 controls the suction unit 5 to start suction operation. Moreover, the detection computing unit 83 receives the detection signal from the front sensor 51 of the sensor unit 7 to compute the presence or absence of the peripheral obstacle S and the distance to the obstacle S, and receives the detection signal from the distance sensor 52 to compute the distance to the floor surface F while self-propelling the vacuum body 2 by the traveling drive unit 4 to clean the floor surface F by the suction unit 5. During self-propelling along the floor surface F for cleaning, the distance sensor 52 measures the distance to the floor surface F, and therefore, is controlled in a step sensing mode for sensing the step continuous to the floor surface F. In a case where the step has been sensed, the traveling control unit 81 drivably controls the traveling drive unit 4 not to fall from the step, thereby avoiding the step.

In a case where the front sensor 51 has sensed the obstacle S in the front of the vacuum body 2 during traveling, the detection computing unit 83 calculates the distance to the obstacle S by computing. When coming close to the obstacle S within a predetermined distance, the vehicle height control unit 84 drives, as illustrated in Fig. 5(B), the output shaft of the actuator 42 of the vehicle height adjustment unit 6 in an extension direction to move the wheels 21 down, thereby moving the front side of the vacuum body 2 up. At this point, the maximum height to which the vehicle height adjustment unit 6 can increase the vehicle height of the vacuum body 2 is set as a height to which such a vehicle height is increased. Moreover, a lower surface of the vacuum body 2 and the floor surface F are apart from each other, and therefore, the suction port 32 of the suction unit 5 moves down due to the force of gravity. In a case where the vehicle height of the vacuum body 2 has been increased by the vehicle height adjustment unit 6, the distance sensor 52 is switched from the step sensing mode to a vehicle height adjustment mode.

As described above, forward movement by the traveling drive unit 4 is continued with the vehicle height of the front side of the vacuum body 2 being increased, and when the distance sensor 52 switched to the vehicle height adjustment mode is positioned above the obstacle S as illustrated in Fig. 5(C), the detection computing unit 83 calculates the distance to the obstacle S by computing based on the detection signal of the distance sensor 52. When it is determined that the calculated distance to the obstacle S is great, the vehicle height control unit 84 drives the vehicle height adjustment unit 6 in the direction of decreasing the vehicle height to control the distance to the obstacle S to within a predetermined range. When the vehicle height is adjusted as described above to cause the lower surface of the vacuum body 2 and the obstacle S to approach each other, the suction port 32 of the suction unit 5 comes into contact with the obstacle S to move up toward the inside of the vacuum body 2.

Further, when forward movement by the traveling drive unit 4 is continued and the wheels 21 move over the obstacle S to start the operation of moving over the obstacle S as illustrated in Fig. 5(D), a distance between the lower surface of the vacuum body 2 on the front side thereof and the obstacle S increases again, and therefore, such a distance is detected as needed by the distance sensor 52 and is calculated by the detection computing unit 83. Based on the distance to the obstacle S calculated as needed, the vehicle height control unit 84 continuously causes the vehicle height adjustment unit 6 to adjust the vehicle height, and controls the distance to the obstacle S to within the predetermined range. By adjustment of the vehicle height as described above, the suction port 32 of the suction unit 5 and the obstacle S are continuously in contact with each other, and therefore, suction performance by the suction unit 5 is less degraded.

Further, when forward movement by the traveling drive unit 4 is continued and the front side of the vacuum body 2 protrudes from the obstacle S as illustrated in Fig. 5(E), the distance sensor 52 detects the distance to the floor surface F, and therefore, the distance calculated by the detection computing unit 83 suddenly increases. However, the distance sensor 52 is in the vehicle height adjustment mode, forward movement is continued without avoiding the step between the obstacle S and the floor surface F. At this point, the vehicle height control unit 84 controls the vehicle height adjustment unit 6 to adjust the vehicle height such that the distance to the floor surface F falls within a predetermined range. Thus, the wheels 21 are driven in an upward movement direction (a vehicle height decreasing direction), and the vehicle height returns to an initial position. By continuation of forward movement by the traveling drive unit 4, the operation of moving over the obstacle S ends. After having moved over the obstacle S, the distance sensor 52 is switched from the vehicle height adjustment mode to the step sensing mode, and thereafter, self-propelling along the floor surface F for cleaning is continued.

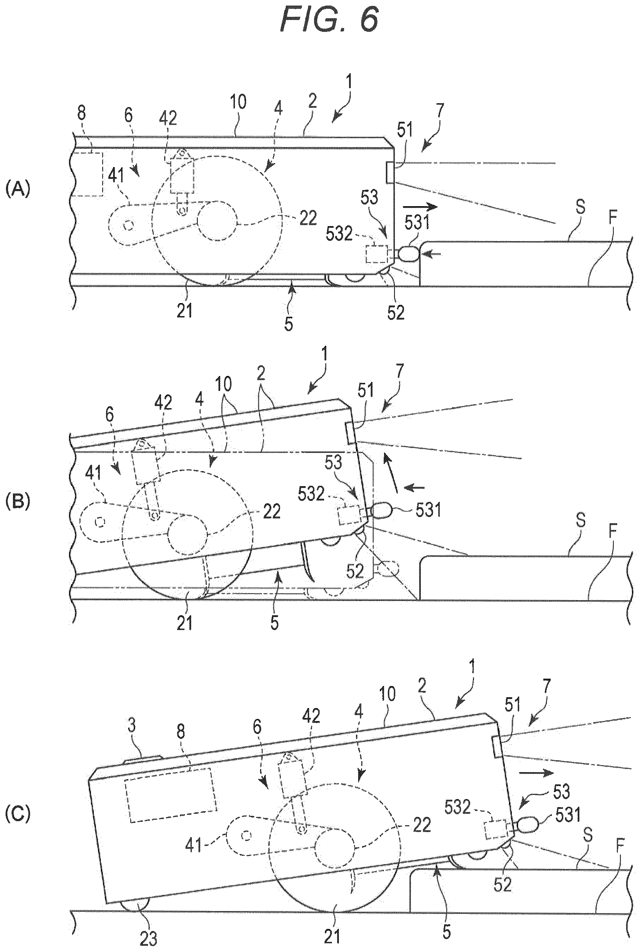

Figs. 6(A) to 6(C) are side views of another type of operation of the self-propelled vacuum. Fig. 6 illustrates operation of the self-propelled vacuum 1 in a case where the front sensor 51 cannot sense the obstacle S.

In a case where traveling is continued without sensing the obstacle S by the front sensor 51, the bumper 531 of the contact sensor 53 comes into contact with the obstacle S as illustrated in Fig. 6(A), and such contact is sensed by the displacement meter 532. When such contact with the obstacle S is sensed, the traveling control unit 81 having received a signal from the detection computing unit 83 drivably controls the traveling drive unit 4 to rotate the wheels 21 backward, thereby moving the vacuum body 2 backward by a predetermined distance.

After the vacuum body 2 has moved backward from the obstacle S by the predetermined distance, the traveling control unit 81 causes the traveling drive unit 4 to stop rotation of the wheels 21, and as illustrated in Fig. 6(B), the vehicle height control unit 84 drives the actuator 42 of the vehicle height adjustment unit 6 to move the front side of the vacuum body 2 up. At this point, the maximum height to which the vehicle height adjustment unit 6 can increase the vehicle height of the vacuum body 2 is set as the height to which such a vehicle height is increased.

While the vehicle height of the front side of the vacuum body 2 is increased as described above, the traveling control unit 81 drives the wheels 21 by the traveling drive unit 4 to move the vacuum body 2 forward, and when the distance sensor 52 is positioned above the obstacle S as illustrated in Fig. 6(C), the detection computing unit 83 calculates the distance to the obstacle S by computing based on the detection signal of the distance sensor 52. When it is determined that the calculated distance to the obstacle S is great, the vehicle height control unit 84 drives the vehicle height adjustment unit 6 in the direction of decreasing the vehicle height, thereby performing control such that the distance to the obstacle S falls within the predetermined range. Thereafter, the traveling drive unit 4 and the vehicle height adjustment unit 6 are driven to continue cleaning as in Figs. 5(D) to 5(E).

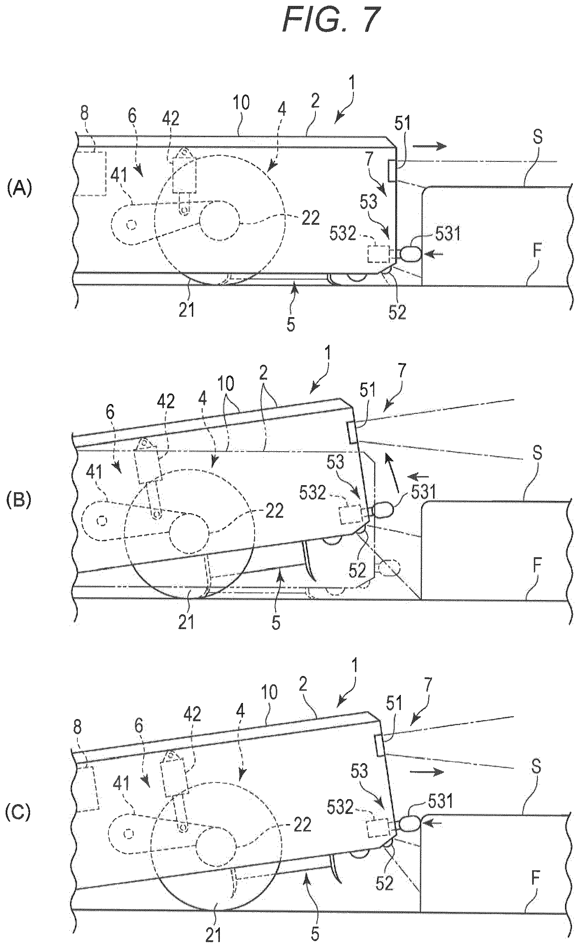

Figs. 7(A) to 7(C) are side views of still another type of operation of the self-propelled vacuum. Fig. 7 illustrates operation of the self-propelled vacuum 1 in a case where the front sensor 51 cannot sense the obstacle S, and also illustrates operation in a case where there is an obstacle S having a greater height than that illustrated in Fig. 6.

In a case where traveling is continued without sensing the obstacle S by the front sensor 51, the bumper 531 of the contact sensor 53 comes into contact with the obstacle S as illustrated in Fig. 7(A), and such contact is sensed by the displacement meter 532. When such contact with the obstacle S is sensed, the traveling control unit 81 having received the signal from the detection computing unit 83 drivably controls the traveling drive unit 4 to rotate the wheels 21 backward, thereby moving the vacuum body 2 backward by the predetermined distance

After the vacuum body 2 has moved backward from the obstacle S by the predetermined distance, the traveling control unit 81 causes the traveling drive unit 4 to stop rotation of the wheels 21, and as illustrated in Fig. 7(B), the vehicle height control unit 84 drives the actuator 42 of the vehicle height adjustment unit 6 to move the front side of the vacuum body 2 up. At this point, the maximum height to which the vehicle height adjustment unit 6 can increase the vehicle height of the vacuum body 2 is set as the height to which such a vehicle height is increased.

As described above, the traveling control unit 81 drives the wheels 21 by the traveling drive unit 4 to move the vacuum body 2 forward with the vehicle height of the front side of the vacuum body 2 being increased. Thus, when the bumper 531 of the contact sensor 53 comes into contact with the obstacle S again as illustrated in Fig. 7(C), the control unit 8 determines that the obstacle S has such a height that the self-propelled vacuum 1 cannot move over the obstacle S. Upon such determination, the traveling control unit 81 drivably controls the traveling drive unit 4 to rotate the pair of wheels 21 at different numbers of rotations, thereby turning the vacuum body 2 to avoid the obstacle S. After the obstacle S has been avoided, the return operation of returning to a path according to the predetermined traveling program is executed, and after the self-propelled vacuum 1 has returned to the path, cleaning is continued.

When the predetermined traveling program ends in the above-described manner, the traveling control unit 81 stops the traveling drive unit 4, and the suction control unit 82 stops operation of the suction unit 5. Moreover, the control unit 8 brings the self-propelled vacuum 1 into a standby state.

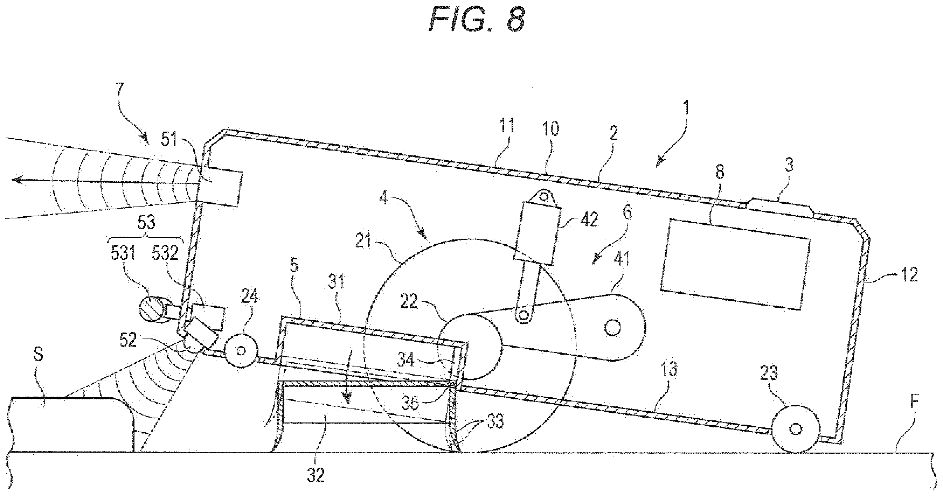

Note that the self-propelled vacuum 1 of the present embodiment may include a configuration illustrated in Fig. 8 as the suction unit 5. Fig. 8 is a sectional view of a variation of the self-propelled vacuum. As illustrated in Fig. 8, a guide portion 34 configured to guide the suction port 32 is provided in the guide recessed portion 31 of the suction unit 5, and the suction port 32 is rotatably movably supported on the guide portion 34 through a hinge portion 35. The hinge portion 35 is guided up and down along the guide portion 34, and accordingly, the suction port 32 moves down due to the force of gravity. Moreover, the suction port 32 rotatably moves about the hinge portion 35, and accordingly, the brush portion 33 easily closely contacts the floor surface F.

According to the present embodiment described above, the following features/advantageous effects can be provided.
(1) In a case where the front sensor 51 has sensed the obstacle S during traveling, the vehicle height adjustment unit 6 increases the vehicle height to a predetermined height, and thereafter, the self-propelled vacuum 1 moves over the obstacle S while the vehicle height is being adjusted such that the distance to the obstacle S is held within the predetermined range. In this manner, in the case of the obstacle S over which the self-propelled vacuum 1 can move, traveling can be continued without performing avoidance operation, and cleaning time can be shortened.
(2) Moreover, when the self-propelled vacuum 1 moves over the obstacle S, the vehicle height is adjusted such that the distance to the obstacle S is held within the predetermined range. Thus, separation of the suction port 32 and the floor surface F or the obstacle S more than necessary can be prevented, and degradation of the suction performance can be reduced.
(3) Based on a measurement result of the distance sensor 52 in the vehicle height adjustment mode, the vehicle height adjustment unit 6 adjusts the vehicle height such that the distance to the obstacle S is held within the predetermined range, and therefore, vehicle height adjustment accuracy can be improved and degradation of the suction performance can be further reduced.
(4) The step sensor configured to measure the distance to the floor surface F to detect the step is utilized as the distance sensor 52, and therefore, an additional distance sensor does not need to be provided. Thus, an increase in the number of components can be prevented, and the structure of the sensor unit 7 can be simplified.
(5) In a case where the contact sensor 53 has contacted and sensed the obstacle S, the vehicle height adjustment unit 6 increases the vehicle height to the predetermined height. Thus, even when the front sensor 51 cannot sense the obstacle S, the contact sensor 53 can directly sense the presence of the obstacle S, and based on such sensing, move-over operation can be performed.
(6) The suction port 32 of the suction unit 5 is provided to freely protrude or retract from the lower surface of the vacuum body 2. Thus, in the case of increasing the vehicle height by the vehicle height adjustment unit 6, the suction port 32 can move down to hold a constant distance to the floor surface F, and the suction performance can be maintained. Moreover, as illustrated in Fig. 8, when the suction port 32 is rotatably movably supported by the hinge portion 35, even in a case where the front side of the vacuum body 2 is moved up by vehicle height adjustment, the brush portion 33 can closely contact the floor surface F to more reliably maintain the suction performance.

### [Second Embodiment]

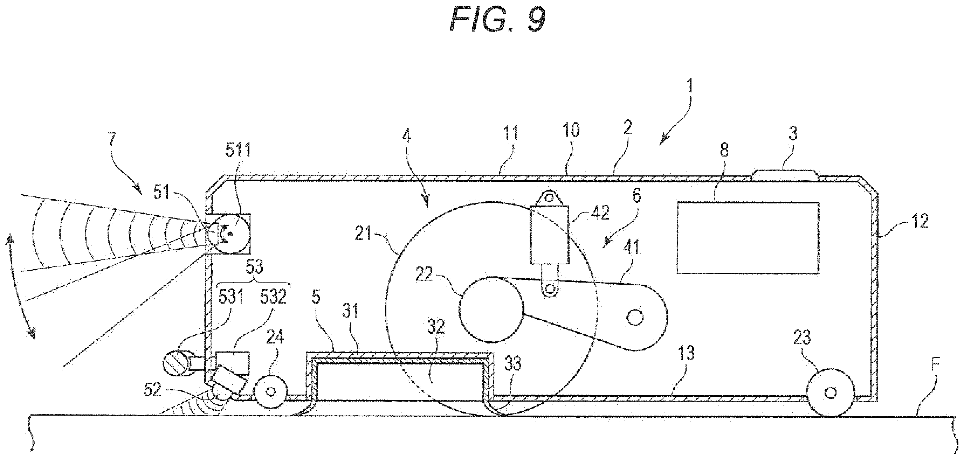

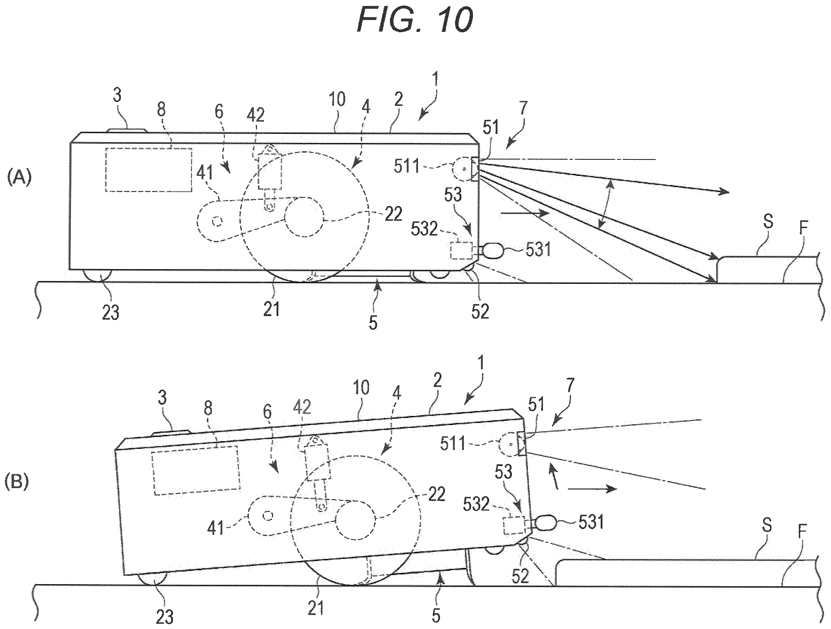

Fig. 9 is a sectional view of a self-propelled vacuum according to a second embodiment of the present invention, and Figs. 10(A) and 10(B) are side views of operation of the self-propelled vacuum.

As compared to the above-described first embodiment, the self-propelled vacuum 1 of the present embodiment is different in that a sensor unit 7 detects the height of an obstacle S in addition to a distance to the obstacle S. Hereinafter, differences from the first embodiment will be described in detail. The same reference numerals are used to represent configurations similar to those of the first embodiment, and description thereof will be omitted or simplified.

As illustrated in Fig. 9, a front sensor 51 is provided with a rotatable-movement drive unit 511. The rotatable-movement drive unit 511 rotatably moves the front sensor 51 about the horizontal axis, thereby changing the sensing area by the front sensor 51 in a height direction. Moreover, a detection computing unit 83 of a control unit 8 (see Fig. 4) is configured to calculate, by computing, not only the distance to the obstacle S sensed by the front sensor 51 but also the height of the obstacle S based on a rotatable-movement angle obtained by the rotatable-movement drive unit 511. That is, in the present embodiment, the front sensor 51 functions as a height sensor.

As operation of the self-propelled vacuum 1 of the present embodiment, in a case where the obstacle S in the front of a traveling vacuum body 2 has been sensed by the front sensor 51 as illustrated in Fig. 10(A), the detection computing unit 83 calculates, by computing, the distance to the obstacle S and the height of the obstacle S. When approaching the obstacle S within a predetermined distance, a vehicle height control unit 84 drives, as illustrated in Fig. 10(B), an output shaft of an actuator 42 of a vehicle height adjustment unit 6 in an extension direction to move wheels 21 down, thereby moving the front side of the vacuum body 2 up. At this point, a height to which the vehicle height of the vacuum body 2 is increased is set according to the calculated height of the obstacle S such that the vehicle height is not increased more than necessary. Thereafter, a traveling drive unit 4 and the vehicle height adjustment unit 6 are driven to continue cleaning as in Figs. 5(C) to 5(E) of the above-described

### first embodiment.

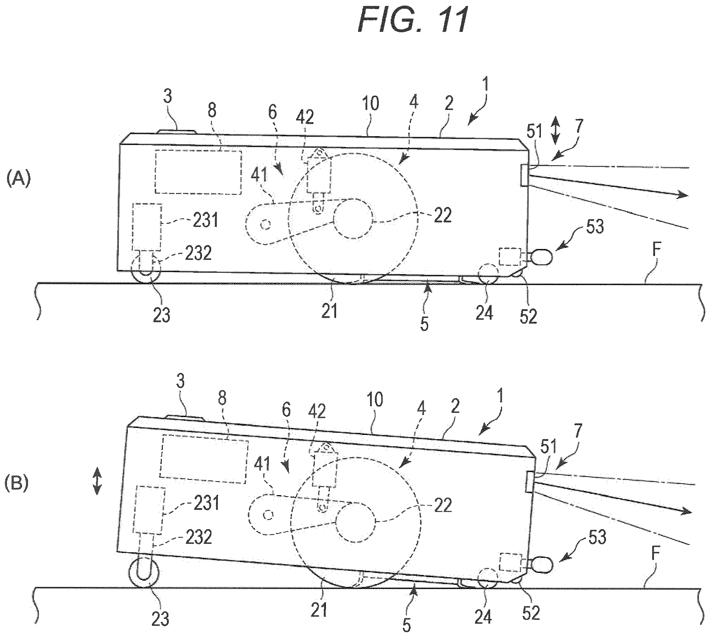

Note that the method for detecting the height of the obstacle S is not limited to rotatable movement of the front sensor 51, and a configuration of Fig. 11 can be employed.

Figs. 11(A) and 11(B) are side views of variations of the self-propelled vacuum.

As illustrated in Fig. 11(A), the output shaft of the actuator 42 of the vehicle height adjustment unit 6 may be driven in a contraction direction to move the wheels 21 up. Accordingly, the front side of the vacuum body 2 may be moved down such that the sensing area by the front sensor 51 may be changed in the height direction. As illustrated in Fig. 11(B), a safety wheel 23 may include an actuator 231. An output shaft 232 of the actuator 231 may be driven in an extension direction to move the safety wheel 23 down, and in this manner, the back side of the vacuum body 2 may be moved up. Accordingly, the sensing area by the front sensor 51 may be changed in the height direction. As described above, a guide wheel 24 contacts a floor surface when the front side of the vacuum body 2 is moved down, and therefore, contact of a distance sensor 52 with the floor surface F is prevented.

According to the present embodiment, the following features/advantageous effects can be provided in addition to the above-described advantageous effects (1) to (6).
(7) The front sensor 51 measures and calculates the height of the obstacle S, and therefore, it can be determined in advance whether or not the self-propelled vacuum 1 can move over the obstacle S by vehicle height adjustment by the vehicle height adjustment unit 6. In a case where it is determined that the self-propelled vacuum 1 can move over the obstacle S, the self-propelled vacuum 1 moves over the obstacle S without performing avoidance operation. Thus, traveling can be continued, and cleaning time can be shortened. On the other hand, in a case where it is determined as the obstacle S over which the self-propelled vacuum 1 cannot move, the avoidance operation may be performed. Because it is not necessary to perform the avoidance operation in a trial-and-error manner, the cleaning time can be shortened.
(8) Based on the height of the obstacle S calculated from a measurement result of the front sensor 51, the vehicle height adjustment unit 6 increases the vehicle height, and therefore, the vehicle height can be adjusted according to the height of the obstacle S from the floor surface F without the need for increasing the vehicle height to a height more than necessary. Thus, vehicle height adjustment accuracy can be improved, and it is not necessary to increase the vehicle height more than necessary. Consequently, degradation of suction performance can be further reduced.
(9) With the configuration in which the posture of the vacuum body 2 is, as illustrated in Fig. 11, changed by up-down movement of the wheels 21 by the vehicle height adjustment unit 6 and up-down movement of the safety wheel 23 by the actuator 231 to change the sensing area by the front sensor 51 and measure the height of the obstacle S, the front sensor 51 can also function as the height sensor, and the configuration of the sensor unit 7 can be simplified.

### [Variations of Embodiments]

Note that the present invention is not limited to the above-described embodiments, and variations, modifications, or the like within a scope in which the object of the present invention can be accomplished are included in the present invention.

For example, in the above-described embodiments, the laser range finder (LRF) is used as the front sensor 51, and the position sensitive detector (PSD) is used as the distance sensor 52. However, an optional sensing section can be utilized as the sensor unit as the obstacle sensing unit. For example, the sensing section may be an ultrasonic sensor, an optical sensor, an electromagnetic sensor, or an image capturing section such as a CCD camera. In the case of using the image capturing section, it may be configured such that an image processing section and the like are provided at a control unit to sense a peripheral obstacle by image analysis.

In the above-described embodiments, the sensor unit 7 as the obstacle sensing unit includes the distance sensor 52 and the contact sensor 53, but at least one of the distance sensor 52 or the contact sensor 53 can be omitted. That is, a sensing section configured to sense the obstacle in the front of the vacuum body 2 as in the front sensor 51 may be provided as the obstacle sensing unit.

In the above-described embodiments, the suction unit 5 includes the suction port 32 movable up and down, but is not limited to such a configuration. The suction port may be unmovably provided at the vacuum body, or may be rotatably movably, slidably, or elastically deformably provided at the vacuum body to follow the shape of the obstacle.

In the above-described embodiments, the self-propelled vacuum 1 illustrated in Fig. 11 is configured such that the front side of the vacuum body 2 is moved down by up-down movement of the wheels 21 and up-down movement of the safety wheel 23 by the actuator 231 to change the sensing area by the front sensor 51 in the up-down direction and the front sensor 51 is utilized as the height sensor to measure the height of the obstacle. However, the case of using the front sensor 51 as the height sensor is not limited to downward movement and inclination of the front side of the vacuum body 2, and the vacuum body 2 may be moved up and down without inclination.

Moreover, in the self-propelled vacuum 1 illustrated in Figs. 9 and 10, the sensing area by the front sensor 51 is changed in the up-down direction by rotatable movement by the rotatable-movement drive unit 511, but the present invention is not limited to above. It may be configured such that an up-down drive unit configured to move the front sensor 51 in the up-down direction relative to the vacuum body 2 is provided and the front sensor 51 is moved up and down by the up-down drive unit to change the sensing area in the up-down direction.

Moreover, in the self-propelled vacuum of the present invention, a corner cleaning device, a side brush, or the like is preferably provided at the vacuum body. In the self-propelled vacuum including the corner cleaning device, the side brush or the like, the side brush or the like might enter below a carpet, a rug or the like., leading to curling up of the rug or the like. However, according to the self-propelled vacuum of the present invention, in a case where the obstacle sensing unit has sensed the obstacle such as the rug, the self-propelled vacuum moves over the obstacle while the vehicle height adjustment unit is adjusting the vehicle height of the vacuum body, and therefore, a situation such as curling up of the rug or the like can be avoided.

### INDUSTRIAL APPLICABILITY

As described above, the present invention can be suitably utilized for a self-propelled vacuum configured so that depending on an obstacle, the self-propelled vacuum moves over the obstacle without performing avoidance operation to shorten cleaning time.

### LIST OF REFERENCE NUMERALS

- 1: self-propelled vacuum
- 2: vacuum body
- 3: body operation unit
- 4: traveling drive unit
- 5: suction unit
- 6: vehicle height adjustment unit
- 7: sensor unit
- 8: control unit
- 21: wheel
- 32: suction port
- 51: front sensor (height sensor)
- 52: distance sensor
- 53: contact sensor
- 81: traveling control unit
- 84: vehicle height control unit
- F: floor surface
- S: obstacle

## Claims

1. A self-propelled vacuum for performing cleaning while traveling along a floor surface, comprising:
a vacuum body having a wheel for self-propelling;
a suction port provided at a lower surface of the vacuum body to suck dust and the like on a floor surface;
a traveling drive unit configured to drive the wheel;
an obstacle sensing unit configured to sense an obstacle in a front in a traveling direction;
a vehicle height adjustment unit configured to move the wheel up and down to adjust a vehicle height of the vacuum body;
a traveling control unit configured to control the traveling drive unit; and
a vehicle height control unit configured to control the vehicle height adjustment unit,
wherein in a case where the traveling drive unit is driven and the obstacle sensing unit senses the obstacle during self-propelling, the vehicle height adjustment unit increases the vehicle height to a predetermined height, and thereafter, the self-propelled vacuum moves over the obstacle while the vehicle height is being adjusted such that a distance to the obstacle is held within a predetermined range.

2. The self-propelled vacuum according to claim 1, wherein
the obstacle sensing unit includes a height sensor configured to measure a height of the obstacle from the floor surface, and
the vehicle height adjustment unit increases the vehicle height based on a measurement result of the height sensor.

3. The self-propelled vacuum according to claim 2, wherein
the height sensor is provided in a front of the vacuum body, and is configured to measure the height of the obstacle from the floor surface by changing a sensing area in an up-down direction in association with adjustment of the vehicle height of the vacuum body by the vehicle height adjustment unit.

4. The self-propelled vacuum according to any one of claims 1 to 3, wherein
the obstacle sensing unit includes a distance sensor provided at a lower front portion of the vacuum body to measure the distance to the obstacle, and
based on a measurement result of the distance sensor, the vehicle height adjustment unit adjusts the vehicle height such that the distance to the obstacle is held within the predetermined range.

5. The self-propelled vacuum according to claim 4, wherein
the distance sensor includes a step sensor configured to sense a step on the floor surface.

6. The self-propelled vacuum according to any one of claims 1 to 5, wherein
the obstacle sensing unit includes a contact sensor configured to sense contact with the obstacle, and
in a case where the contact sensor has contacted the obstacle to sense the obstacle, the vehicle height adjustment unit increases the vehicle height to a predetermined height.

7. The self-propelled vacuum according to any one of claims 1 to 6, wherein
the suction port is provided to freely protrude or retract from the lower surface of the vacuum body.
